# EUROPÄISCHE PATENTSCHRIFT

(11) **EP 3 513 629 B1**
(45) Veröffentlichungstag und Bekanntmachung des Hinweises auf die Patenterteilung: **01.01.2025**
(21) Anmeldenummer: 17800806.6
(22) Anmeldetag: 10.11.2017
(51) Int. Cl.: H05B 45/385

(54) **SPERRWANDLER ZUM BETREIBEN VON EINEM ODER MEHREREN LEUCHTMITTELN, DAZUGEHÖRIGES VERFAHREN UND BETRIEBSGERÄT**
FLYBACK CONVERTER FOR OPERATING ONE OR MORE LIGHTING MEANS, ASSOCIATED METHOD AND OPERATING DEVICE
CONVERTISSEUR INDIRECT SERVANT À FAIRE FONCTIONNER UN OU PLUSIEURS MOYENS D'ÉCLAIRAGE, PROCÉDÉ ASSOCIÉ ET APPAREIL POUR FAIRE FONCTIONNER LE OU LES MOYENS D'ÉCLAIRAGE

(30) Priorität: 11.11.2016 DE 102016222161
(43) Veröffentlichungstag der Anmeldung: 24.07.2019
(73) Patentinhaber: Tridonic GmbH & Co KG, 6851 Dornbirn (AT)
(72) Erfinder: DE CLERCQ, Ludwig Erasmus, 6850 Dornbirn (AT); ORTEGA, Joan, 6850 Dornbirn (AT)
(74) Vertreter: Rupp, Christian
(86) Internationale Anmeldenummer: PCT/EP2017/078911
(87) Internationale Veröffentlichungsnummer: WO 2018/087302

(56) Entgegenhaltungen:
- WO-A1-2016/113397
- DE-A1- 102014 214 746
- US-A1- 2011 199 793

## Beschreibung

Die vorliegende Erfindung bezieht sich auf einen Sperrwandler zum Betreiben eines oder mehrerer Leuchtmittel und ein Betriebsgerät zum Betreiben eines oder mehrerer Leuchtmittel. Das eine oder die mehreren Leuchtmittel umfassen z.B. eine oder mehrere Leuchtdioden (LEDs).

Sperrwandler sind allgemein bekannt. Sie sind allgemein ausgestaltet Gleichstrom eines ersten Spannungspegels (d.h. Eingangsstrom) in den Gleichstrom eines zweiten Spannungspegels (d.h. Ausgangsstrom) umzuwandeln. Je nach Konfiguration und je nach Einsatzgebiet kann der Eingangsstrom niedriger oder höher als der Ausgangsstrom sein. Sperrwandler werden zum Betreiben von Lasten, bzw. zum Versorgen von Lasten mit Strom verwendet. Die vorliegende Erfindung ist auf Leuchtmittel als Lasten gerichtet.

Wichtig ist bei Sperrwandlern ein möglichst breites Spektrum des Ausgangsstroms zu ermöglichen. Dies ist insbesondere auf dem Gebiet der Leuchtmittel (z.B. LEDs) von großer Bedeutung, da die Leuchteigenschaften der Leuchtmittel bei deren Betrieb geändert werden können (z.B. durch Dimmen). Z.B. ändert sich auch der Pegel des Ausgangsstroms in Abhängigkeit davon, ob die Leuchtmittel heraufgedimmt oder herabgedimmt werden.

Die Druckschrift US 2011/0199793 A1 offenbart Schaltnetzteile, welche mit primärseitiger Steuerung gerichtet sind. Das Schaltnetzteil kann ein Ersatzstromsignal liefern, das einen Laststrom darstellt. Das Ersatzstromsignal wird dann zur Steuerung eines Schaltkreises im Schaltnetzteil verwendet.

Die Druckschrift DE 102014214746 A1 offenbart eine Treiberschaltung zum Betreiben eines Leuchtmittels, vorzugsweise wenigstens einer LED, aufweisend einen potentialgetrennten, primärseitig von einer Steuereinheit mittels wenigstens einer angesteuerten Schaltereinheit getakteten Wandler, der einen Gleichrichter speist, von dem ausgehend das Leuchtmittel versorgbar ist, wobei eine Erfassungsschaltung zur indirekten Erfassung des Stroms auf der Sekundärseite des Wandlers einen Transformator mit wenigstens einer primärseitigen Wicklung aufweist.

Die Druckschrift WO 2016/113397 A1 offenbart eine Ansteuerschaltung zur Bereitstellung eines Betriebsstroms für mindestens ein Leuchtmittel, wobei die Ansteuerschaltung einen isolierten Schaltwandler mit einem von einer Steuerschaltung gesteuerten Schalter aufweist, wobei eine primärseitige Drossel aufgeladen wird, wenn sich der Schalter in seinem leitenden Zustand befindet und die primärseitige Drossel entladen ist, wenn die Steuerschaltung den Schalter in seinem nicht leitenden Zustand steuert. Die Schaltung umfasst erste Bestimmungsmittel zum Überwachen des Stroms durch die primärseitige Drossel, wobei die Schaltung zweite Bestimmungsmittel zum Bestimmen eines Ausschaltzeitpunkts aufweist, wobei die zweiten Bestimmungsmittel eine Hilfswicklung mit einer sekundärseitigen Drossel gekoppelt ist und die zweite Ermittlungseinrichtung zur Überwachung der Spannung über der Hilfswicklung zur Ermittlung einer Ausschaltzeit eingerichtet ist.

Die Aufgabe der vorliegenden Erfindung besteht somit darin, ein Betreiben von einem oder mehreren Leuchtmitteln mit einem möglichst breiten Spektrum des dem einen oder den mehreren Leuchtmitteln bereitgestellten Stroms zu ermöglichen.

Diese Aufgabe wird erfindungsgemäß durch die Merkmale der unabhängigen Ansprüche gelöst. Die abhängigen Ansprüche geben weitere Ausbildungen der Erfindung an.

Durch die vorliegende Erfindung wie oben skizziert und nachfolgend genauer erläutert wird ein Betreiben von einem oder mehreren Leuchtmitteln mit einem möglichst breiten Spektrum des dem einen oder den mehreren Leuchtmitteln bereitgestellten Stroms ermöglicht. Darüber hinaus wird die Genauigkeit hinsichtlich des Bereichs des durch den Sperrwandler auszugebenden Strombereichs verbessert.
- Fig. 1: eine Ausgestaltung eines Betriebsgeräts zum Betreiben von Leuchtmitteln gemäß einer Ausführungsform der vorliegenden Erfindung,
- Fig. 2: einen beispielhaften Stromverlauf durch einen Sperrwandler in zwei Betriebsmodi des Sperrwandlers gemäß einer Ausführungsform der vorliegenden Erfindung,
- Fig. 3: einen beispielhaften Stromverlauf durch einen Sperrwandler in zwei Betriebsmodi des Sperrwandlers gemäß einem nicht zur vorliegenden Erfindung gehörigen Beispiel,
- Fig. 4: eine weitere Ausgestaltung eines Betriebsgeräts zum Betreiben von Leuchtmitteln gemäß einer Ausführungsform der vorliegenden Erfindung.

Im Nachfolgenden werden Komponenten mit gleichen oder ähnlichen Funktionen in den Figuren mit gleichen Bezugszeichen bezeichnet. Darüber hinaus ist darauf hinzuweisen, dass die hierin erläuterten Ausführungsformen mit einander kombinierbar sind, es sei denn, eine Kombination ist explizit ausgeschlossen.

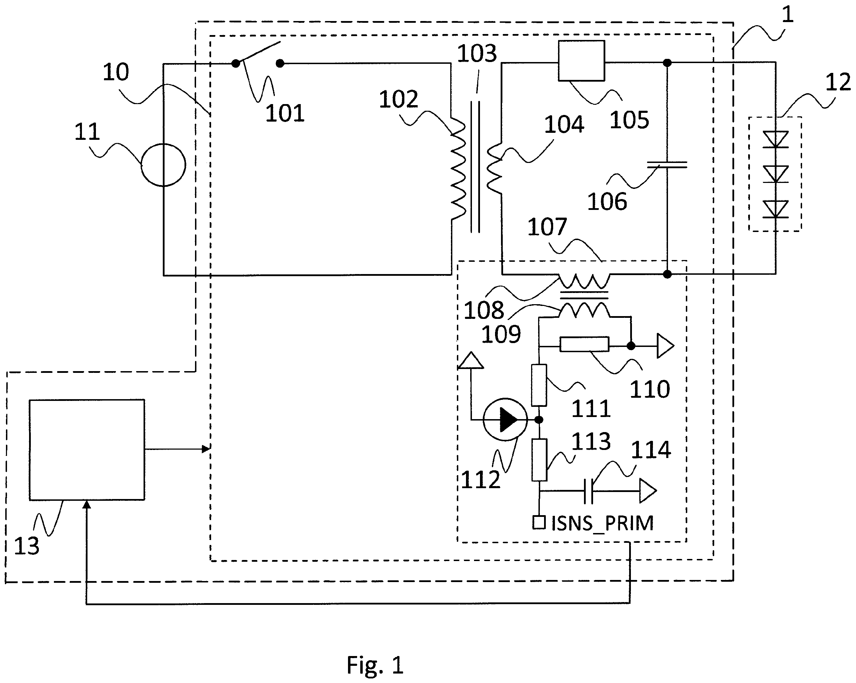

Fig. 1 zeigt eine beispielhafte Ausgestaltung eines Betriebsgeräts 1 zum Betreiben von einem oder mehreren Leuchtmitteln 12 gemäß einer Ausführungsform der vorliegenden Erfindung.

Das eine oder die mehreren Leuchtmittel 12 umfassen gemäß einer Ausführungsform eine oder mehrere Leuchtdioden (LEDs). Die LEDs 12 können verschieden ausgestaltet sein, und die vorliegende Erfindung ist auf keine bestimmte Ausgestaltung der LEDs 12 beschränkt. Gemäß einer Ausführungsform umfassen die LEDs 12 anorganische und/oder organische LEDs. Auch die Anordnung der LEDs 12 ist auf verschiedene Weisen gestaltbar. So sind die LEDs 12 gemäß einer Ausführungsform in Serie geschaltet, während gemäß einer weiteren Ausführungsform die LEDs 12 parallel geschaltet sind. Gemäß einer weiteren Ausführungsform sind die LEDs 12 in komplexeren Anordnungen verschaltet, beispielsweise in mehreren zueinander parallel geschalteten Reihenschaltungen. In Fig. 1 sind beispielhaft drei Leichtmittel 12, z.B. LEDs 12 dargestellt. Die vorliegende Erfindung ist allerdings nicht auf dieses Beispiel beschränkt und erlaubt das Verwenden einer beliebigen Anzahl von Leuchtmitteln 12 wie z.B. LEDs 12, d.h. das Verwenden mindestens eines Leuchtmittels 12 (z.B. mindestens einer LED) .

Das Betriebsgerät 1 bzw. die Betriebsschaltung 1 dient dem Betrieb des einen oder der mehreren Leuchtmittel 12 (z.B. LEDs) . Insbesondere dient das Betriebsgerät 1 der Versorgung des einen oder der mehreren Leuchtmittel 12 wie z.B. LEDs mit Strom. Dem Betriebsgerät 1 wird von einer Spannungsquelle 11 oder externen Stromquelle 11 eine Versorgungsspannung zugeführt. Die Versorgungsspannung ist beispielsweise eine Gleichspannung oder eine gleichgerichtete Wechselspannung. Gemäß einer Ausführungsform umfasst das Betriebsgerät eine Leistungsfaktorkorrekturschaltung (nicht gezeigt), welche die Versorgungsspannung bereitstellt.

Zum Bereitstellen des von der Spannungsquelle 11 oder externen Stromquelle 11 erhaltenen Stroms weist das Betriebsgerät 1 bzw. die Betriebsschaltung 1 einen Sperrwandler 10 (auch als "Flyback Converter" bekannt) als Konverter auf. Der Sperrwandler 10 ist ausgestaltet, den Eingangsstrom, der von der Spannungsquelle 11 oder externen Stromquelle 11 erhalten wird und einen ersten Spannungspegel aufweist, in einen Ausgangsstrom, der auf der Sekundärseite fließt, eines zweiten Spannungspegels umzuwandeln. Der Ausgangsstrom wird dem einen oder den mehreren Leuchtmitteln 12 zugeführt, und das eine oder die mehreren Leuchtmittel 12 werden mit dem zugeführten Ausgangsstrom des Sperrwandlers 10 betrieben.

Der Sperrwandler 10 kann verschiedene Ausgestaltungen haben, z.B. kann er auch ein synchroner Sperrwandler sein. In Fig. 1 wird beispielhaft eine allgemeine Schaltung eines Sperrwandlers gezeigt, die auch als Prinzip Schaltung verstanden werden kann. Dadurch wird verdeutlicht, dass die konkrete Konstruktion des Sperrwandlers 10, der gemäß der vorliegenden Erfindung verwendet wird, sehr variabel ist, d.h. je nach Bedarf mit entsprechenden weiteren Komponenten ergänzt werden kann.

Allgemein weist der Sperrwandler 10 gemäß der vorliegenden Ausführungsform eine Primärseite 101, 102 und eine Sekundärseite 104 bis 107 auf. Die Primärseite 101, 102 umfasst gemäß der vorliegenden Ausführungsform einen primärseitigen (ersten) Schalter 101, der zum Ansteuern des Stromflusses durch die Primärseite 101, 103 ausgestaltet ist, und eine primärseitige Wicklung 102 auf. Die Sekundärseite 104 bis 107 umfasst gemäß der vorliegenden Ausführungsform eine weitere, sekundärseitige Wicklung 104, einen sekundärseitigen (zweiten) Schalter 105 oder - nicht erfindungsgemäß - eine Diode 105, der/die zum Ansteuern des Stromflusses durch die Sekundärseite 104 bis 107 ausgestaltet ist, einen Kondensator 106 und eine Stromerfassungsschaltung 107. Die primärseitige Wicklung 102 und die sekundärseitige Wicklung 104 bilden mit dem Transformatorkern 103 einen Transformator des Sperrwandlers aus, über den Strom von der Primärseite 101, 102 zu der Sekundärseite 104 bis 107 übertragen wird. Dabei sind die primärseitige Wicklung 102 und die sekundärseitige Wicklung 104 galvanisch getrennt und magnetisch gekoppelt (magnetische Kopplung durch den Transformatorkern 103). Die Primärseite 101, 102 erhält den Strom von der Spannungsquelle 11 oder externen Stromversorgung 11. Der Ausgangsstrom der Sekundärseite 104 bis 107 wird dem einen oder den mehreren Leuchtmitteln (z.B. LEDs) 12 zugeführt.

Der Sperrwandler 10 arbeitet in zwei Phasen. In der ersten Phase, die auch als Leitphase bezeichnet wird, ist der primärseitige Schalter 101 eingeschaltet (d.h. der Schalter 101 ist geschlossen und leitend). Somit kann der Strom durch die Primärseite 101, 102 fließen. Was die Sekundärseite 104 bis 107 anbetrifft, so fließt durch diese kein Strom in der ersten Phase, da in der ersten Phase der Schalter 105, der zum Sperren der Sekundärseite 104 bis 107 verwendet wird, ausgeschaltet (d.h. offen und nicht leitend) ist oder, wenn nicht ein Schalter 105, sondern - nicht erfindungsgemäß - eine Diode 105 zum Sperren der Sekundärseite 104 bis 107 verwendet wird, die Diode 105 deaktiviert ist. In der ersten Phase ist die sekundärseitige Wicklung 104 stromlos, und es baut sich im Transformatorkern 103 und dessen Luftspalt zwischen der primärseitigen Wicklung 102 und der sekundärseitigen Wicklung 104 eine magnetische Spannung auf. In der ersten Phase gibt es keine Energieübertragung von der Primärseite 101, 102 zu der Sekundärseite 104 bis 107. Der Strom, der in der ersten Phase der der Primärseite 101, 102 des Sperrwandlers 10 zugeführt wird, wird im Transformator, der die primärseitige Wicklung 102 und die sekundärseitige Wicklung 104 umfasst, gespeichert. Insbesondere wird die Energie bzw. der Strom in dem zwischen den zwei Wicklungen 102, 104 entstandenen Magnetfeld des Transformatorkerns 103 gespeichert.

In der zweiten Phase, die auch als Sperrphase bezeichnet wird, wird der primärseitige Schalter 101 ausgeschaltet (d.h. der Schalter 101 ist geöffnet und ist nicht leitend). Die Primärseite 101, 102 bezieht also keinen Strom von der Spannungsquelle 11 oder externen Stromquelle 11. Stattdessen wird der sekundärseitige Schalter 105 eingeschaltet (d.h. der Schalter 105 ist geschlossen und ist leitend) oder, wenn auf der Sekundärseite 104 bis 107 nicht ein Schalter 105, sondern - nicht erfindungsgemäß - die Diode 105 verwendet wird, die Diode 105 aktiviert. Dadurch wird die zuvor im Magnetfeld des Transformatorkerns 103 gespeicherte Energie bzw. der im Magnetfeld des Transformatorkern 103 gespeicherte Energie als Strom über die Sekundärseite 104 bis 107 entladen. Dabei fließt der Strom ausgehend von der Magnetisierung des Transformatorkerns 103 mit der sekundären Wicklung 104 durch die Sekundärseite 104 bis 107 und anschließend zu dem einen oder zu den mehreren Leuchtmitteln 12. Der Kondensator 106 wird durch den Stromfluss auf der Sekundärseite 104 bis 107 auf die Ausgangsspannung aufgeladen. Wird die zweite Phase beendet und die erste Phase erneut angefangen, werden das eine oder die mehreren Leuchtmittel 12 durch den im Kondensator 106 gespeicherten Strom versorgt, wie bereits oben erwähnt.

Um den Betrieb des Sperrwandlers 10 möglichst effizient und effektiv zu steuern, weist der Sperrwandler 10 gemäß der vorliegenden Ausführungsform auch eine Stromerfassungsschaltung 107 auf. Die Stromerfassungsschaltung 107 erfasst den durch die Sekundärseite 104 bis 107 fließenden Strom. Die erfasste Strominformation reicht die Stromerfassungsschaltung 107 gemäß der vorliegenden Ausführungsform an eine Steuerung bzw. Steuerschaltung 13 weiter. Die Steuerung bzw. Steuerschaltung 13 ist gemäß der vorliegenden Ausführungsform eine Komponente des Betriebsgeräts 1 bzw. der Betriebsschaltung 1. Das Überreichen der Strominformation an die Steuerung 13 wird in Fig. 1 durch den Pfeil angezeigt, der von der Stromerfassungsschaltung 107 zu der Steuerung 13 führt. Die Steuerung 13 verwendet dann die erhaltene Strominformation zum Ansteuern des Betriebs des Sperrwandlers 10.

Gemäß der vorliegenden Ausführungsform wird der durch die Sekundärseite 104 bis 107 fließende Strom unter Berücksichtigung des Offset-Stroms 112 erfasst, der innerhalb der Stromerfassungsschaltung 107 eingespeist werden kann. Der durch die Stromerfassungsschaltung 107 fließende Strom bzw. die Steuerinformation ISNS_PRIM, die durch die Steuerung 13 erfasst und beim Betrieb des Sperrwandlers 10 berücksichtigt wird, entspricht sodann z.B. dem tatsächlichen Wert des durch die Sekundärseite 104 bis 107 fließenden Stroms, der um den Wert des Offset-Stroms erhöht ist. Das Berücksichtigen des Offset-Stroms 112 bei dem an die Steuerung 13 zu reichenden Wert des durch die Sekundärseite 104 bis 107 fließenden Stroms ermöglicht eine Anpassung des Wertebereiches der zu erfassenden Größe an den Erfassungsbereich der Steuerung 13 und somit eine genauere Ansteuerung des Sperrwandlers 10.

In Fig. 1 ist eine beispielhafte Ausgestaltung der Stromerfassungsschaltung 107 gezeigt. Gemäß Fig. 1 weist die Stromerfassungsschaltung 107 beispielhaft einen Stromerfassungstransformator 108, 109 auf. Weitere alternative Ausführungsformen erlauben weitere geeignete Ausgestaltungen der Stromerfassungsschaltung 107.

Gemäß der vorliegenden Ausführungsform weist die Stromerfassungsschaltung 107 einen Stromerfassungstransformator 108, 109 auf, der eine erste Wicklung 108 und eine zweite Wicklung 109 aufweist. Der Stromerfassungstransformator 108, 109 ist bereitgestellt, um den durch die Sekundärseite 104 bis 107 fließenden Strom zu erfassen. Der Stromerfassungstransformator 108, 109 ist vorzugsweise als Stromwandler ausgebildet. Wenn der Strom auf der Sekundärseite 104 bis 107 des Sperrwandlers einen bestimmten minimalen Wert oder Mindestwert (z.B. Null-Wert) erreicht, wird von der ersten Wicklung 108 des Stromerfassungstransformators 108, 109 an die zweite Wicklung 109 des Stromerfassungstransformators 108, 109 eine entsprechende minimale Menge des Stroms gereicht. D.h., wenn durch die Sekundärseite 104 bis 107 des Sperrwandlers Strom fließt, wird eine entsprechende Menge des Stroms auch an die zweite Wicklung 109 des Stromerfassungstransformators 108, 109 der Stromerfassungsschaltung 107 gereicht.

Gemäß der vorliegenden Ausführungsform weist die Stromerfassungsschaltung 107 ferner einen ersten Resonator 110 (auch Abschlußwiderstand oder "burden resistor" genannt) auf, der parallel zur zweiten Wicklung 109 angeordnet ist. Wenn auf der zweiten Wicklung 109 Strom fließt, entwickelt sich ein Spannungsverlauf auf dem ersten Resonator 110, wobei die Spannung über dem ersten Resonator proportional zu dem Strom durch die zweite Wicklung 109 verläuft. Der durch den ersten Resonator 110 gemessene Stromwert entspricht sodann dem tatsächlich erfassten Strom, der durch die Sekundärseite 104 bis 107 des Sperrwandlers 10 fließt. Unter Beachtung des Wicklungsverhältnisses von erster Wicklung 108 zur zweiten Wicklung 108 kann somit anhand der Spannung über dem ersten Resonator 110 auf den durch die erste Wicklung 109 fließenden Strom geschlossen werden.

Da gemäß der vorliegenden Ausführungsform auch der Offset-Strom berücksichtigt wird, weist die Stromerfassungsschaltung 107 einen zweiten Resonator 111 auf, welcher den Spannungsverlauf des Offset-Stroms 112 aufnimmt und dem ersten Resonator 110 zuführt, sodass der erste Resonator 110 dem tatsächlich erfassten Strom, der durch die Sekundärseite 104 bis 107 des Sperrwandlers 10 fließt, den Offset-Strom 112 hinzufügt. Der Offset-Strom 112 kann beispielsweise von einer internen Stromquelle erzeugt werden, die den Offset-Strom 112 dem Mittelpunkt vom zweiten Resonator 111 und dritten Resonator 113 zuführt, und somit die Amplitude des an dem ersten Resonator 110 erfassten Stromes verschiebt. Auf diese Weise kann eine einfachere Erfassung des Stromes ermöglicht werden, da durch den Offset-Strom der erfasste Strom in den Wertebereich der Steuerung 13 geschoben werden kann. Beispielsweise kann durch einen positiven Offset-Strom ein teilweise negativer Strom in den positiven Wertebereich verschoben werden.

Darüber hinaus weist die Stromerfassungsschaltung 107 gemäß der vorliegenden Ausführungsform eine Kapazität 114 auf, die einen bestimmten Kapazitätswert aufweist, um eine niedrige Impedanz hinsichtlich Rausch- und/oder Brummspannungen zu präsentieren. Die Kapazität 114 und der dritte Resonator 113 können einen Tiefpaß bilden, sodass Rausch- und/oder Brummspannungen nicht bei der Erfassung des durch die Sekundärseite 104 bis 107 des Sperrwandlers 10 fließenden Stroms berücksichtigt werden müssen. Der an dem ersten Resonator 110 erfasste Strom, der den durch die Sekundärseite 104 bis 107 des Sperrwandlers 10 fließenden Strom wiedergibt, wird in Form einer Strominformation ISNS_PRIM der Steuerung 13 zugeführt (siehe in Fig. 1 den Pfeil, der von der Stromerfassungsschaltung 107 zu der Steuerung 13 führt).

Der Stromerfassungstransformator mit der ersten Wicklung 108 und der zweiten Wicklung 109 kann beispielsweise auch durch eine Transformatorspule ohne Kern gebildet werden. In diesem Fall wären die erste Wicklung 108 und der zweite Wicklung 109 jeweils als Luftspule ausgebildet, die miteinander magnetisch gekoppelt sind.

Die Steuerung 13 verwendet die ihr zugeführte Strominformation ISNS_PRIM zu dem durch die Sekundärseite 104 bis 107 des Sperrwandlers 10 fließenden Strom, um den Betrieb des Sperrwandlers 10 zu steuern. Insbesondere wird durch die Steuerung 13 bestimmt, in welchem Betriebsmodus der Sperrwandler 10 zu betreiben ist. Die Steuerung 13 führt die Ansteuerung des Sperrwandlers 10 gemäß der vorliegenden Ausführungsform durch Senden oder Übermitteln entsprechender Steuersignale an den Sperrwandler 10 aus. Dies ist in Fig. 1 durch den von der Steuerung 13 zu dem Sperrwandler 10 führenden Pfeil gezeigt. Die Steuerung 13 steuert das Ein- und Ausschalten des primärseitigen Schalters 101 an. Es erfolgt dabei ein hochfrequenten Takten des primärseitigen Schalters 101, wobei die Zeitdauern der Leitphase (die Einschaltzeitdauer) und der Sperrphase (die Ausschaltzeitdauer) des primärseitigen Schalters 101 von der Steuerung 13 gesteuert werden. Ferner steuert die Steuerung 13 das Ein- und Ausschalten des sekundärseitigen Schalters 105 an oder das Aktivieren und Deaktivieren der sekundärseitigen Diode 105, wenn statt des Schalters 105 eine - nicht erfindungsgemäße - Diode 105 zum Steuern des Stromflusses durch die Sekundärseite 104 bis 107 des Sperrwandlers 10 verwendet wird. Die Steuerung 13 kann das Ein- und Ausschalten des sekundärseitigen Schalters 105 mittels einer Ansteuerschaltung ansteuern, die vorzugsweise potentialgetrennt ausgeführt ist. Die Ansteuerschaltung kann beispielsweise einen Ansteuertransformator aufweisen, oder alternativ eine Pegelversatzstufe oder zumindest einen Kondensator, um eine potentialgetrennte Ansteuerung des sekundärseitigen Schalters 105 zu ermöglichen, wenn die Steuerung 13 auf der Primärseite und somit primärseitigen Potential angeordnet ist. Das Ansteuern und somit das Ein- und Ausschalten des sekundärseitigen Schalters 105 durch die Steuerung 13 erfolgt genauso wie die Ansteuerung des Ein- und Ausschalten des sekundärseitigen Schalters 105 mit hoher Frequenz, beispielsweise im Bereich von 50 kHz bis 200 kHz.

Zumindest ein Schalter der Schalter 101, 105 des Sperrwandlers 10 ist gemäß weiterer Ausführungsformen, die mit den hierin beschriebenen Ausführungsformen kombinierbar sind, beispielsweise als Transistor, z.B. Biploartransistor, Bipolartransistor mit isolierter Gate-Elektrode (IGBT), Feldeffekttransistor (FET) oder MetallOxid-Halbleiter-Feldeffekttransistor (MOSFET) ausgebildet.

Was die Ausgestaltung der Steuerung 13 anbetrifft, so erlaubt die vorliegende Erfindung verschiedene Ausgestaltungen der Steuerung 13. So z.B. ist die Steuerung 13 gemäß einer Ausführungsform eine integrierte Halbleiterschaltung oder umfasst eine integrierte Halbleiterschaltung. Gemäß weiterer Ausführungsformen ist die Steuerung 13 als ein Prozessor, ein Mikroprozessor, ein Controller, ein Mikrocontroller, eine anwendungsspezifische Spezialschaltung (ASIC, "Application Specific Integrated Circuit") oder eine Kombination der genannten Einheiten ausgestaltet.

Der Sperrwandler 10 ist ausgestaltet, in einem ersten Betriebsmodus oder in einem zweiten oder dritten Betriebsmodus betrieben zu werden.

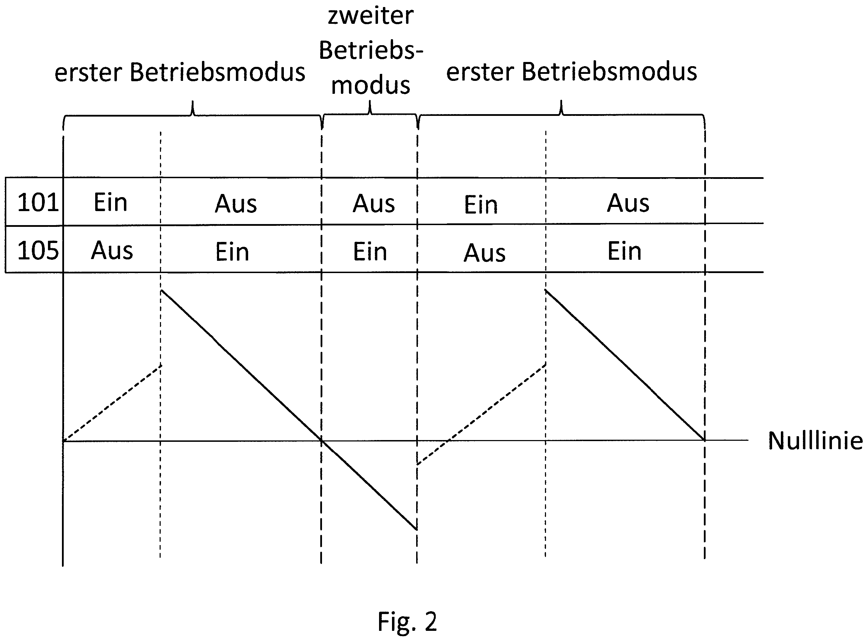

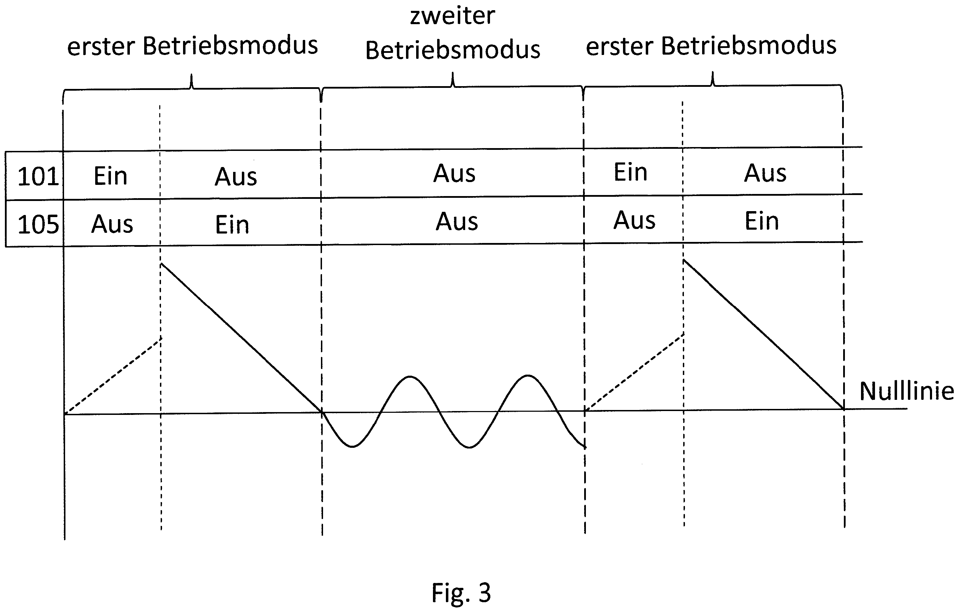

Der erste Betriebsmodus des Sperrwandlers 10 beginnt mit einer Leitphase und endet mit einer Sperrphase, wobei in der Sperrphase der durch die Sekundärseite 104 bis 107 des Sperrwandlers 10 fließende Strom Richtung Null sinkt. Dieser Betriebsmodus wird im Folgenden auch Boundary Conduction Mode (BCM) . Der BCM-Modus ist allgemein bekannt. In dem BCM-Modus, wenn der Sperrwandler 10 in der Leitphase ist, steigt zunächst der Stromwert von Null bzw. dem umgesetzten vorigen Stromwert auf der Primärseite 101, 102 des Sperrwandlers 10 an, da die Primärseite 101, 102 mit Strom versorgt wird. Beispielsweise beim ersten Einschalten des primärseitigen Schalters 101, also der ersten Leitphase, fließt zu Beginn noch kein Strom, der Strom liegt also bei Null. Nach dem Ende eines vorigen Zyklus, also nach dem Ende einer Sperrphase, kann der durch die Sekundärseite 104 bis 107 des Sperrwandlers 10 fließende Strom ungleich Null sein, da noch ein Stromfluß vorhanden ist. In diesem Fall wird aufgrund der bestehenden Magnetisierung des Transformators der Strom beim Einschalten des primärseitigen Schalters 101 einen negativen Wert einnehmen, der dem Wicklungsverhältnis entsprechend umgesetzten vorigen Strom der Sekundärseite entspricht. Dieses wird in Figuren 2 und 3 durch die unterbrochen dargestellten Linien gezeigt. Die durchgezogenen Linien der Figuren 2 und 3 zeigen den Stromverlauf auf der Sekundärseite 104 bis 107 des Sperrwandlers 10. Wenn der primärseitige Schalter 101 ausgeschaltet wird und wenn auf der Sekundärseite 104 bis 107 des Sperrwandlers der Schalter 105 eingeschaltet wird oder die - nicht erfindungsgemäße - Diode 105 aktiviert wird, fängt die Sperrphase an, in der der Strom durch die Sekundärseite 104 bis 107 des Sperrwandlers 10 fließt. In dem BCM-Modus ist der Pegel des Stroms auf der Sekundärseite 104 bis 107 bei Beginn der Sperrphase das Doppelte von einem durchschnittlichen Strompegel. Da in der Sperrphase der im Magnetfeld des Transformatorkerns 103 gespeicherte Energie aufgebraucht wird, sinkt der Strompegel der Sekundärseite 104 bis 107. Der durch die Sekundärseite 104 bis 107 des Sperrwandlers 10 fließende Strom sinkt Richtung Null, wie es in Figuren 2 und 3 den durchgezogenen Pfeilen des ersten Betriebsmodus zu entnehmen ist.

Damit zeichnet sich der BCM-Modus, welcher der erste Betriebsmodus des Sperrwandlers 10 ist, dadurch aus, dass der durch die Sekundärseite 104 bis 107 fließende Strom in jedem Zyklus, der aus einer Leitphase und aus einer Sperrphase besteht, in der Sperrphase von dem Doppelten des durchschnittlichen Strompegels in die Richtung Null fließt bzw. sinkt, bis der Nullwert bzw. die Nulllinie erreicht worden ist, und in der Leitphase bei Null liegt bzw. Null ist.

In dem ersten Betriebsmodus steuert die Steuerung 13 das Ein- und Ausschalten des Schalters 101 auf der Primärseite 101, 102 und auf der Sekundärseite 104 bis 107 das Ein- und Ausschalten des Schalters 105 oder das Aktivieren und Deaktivieren der - nicht erfindungsgemäßen - Diode 105. Z.B. kann zumindest für eine der Phasen (d.h. für die Leitphase und/oder die Sperrphase) eine vorbestimmte Zeitdauer vorgesehen sein. Die Steuerschaltung 13 schaltet dann die Phase gemäß der jeweiligen vorbestimmten Zeitdauer, sodass der Sperrwandler 10 in der Phase so lange betrieben wird, bis die jeweilige Zeitdauer abgelaufen ist.

Gemäß einer weiteren Ausführungsform berücksichtigt die Steuerung einen maximalen Grenzwert bzw. einen maximalen Strompegel, den der auf der Sekundärseite 104 bis 107 fließende Strom erreichen darf. Damit wird die Schaltung 13 die Leitphase z.B. solange andauern lassen, bis auf der Primärseite der Pegel des dort fließenden Stroms einen Wert erreicht hat, der kleiner oder gleich der Hälfte des maximalen Grenzwerts ist. Die Sperrphase wird dann auf der Sekundärseite 104 bis 107 des Sperrwandlers 10 mit einem Strompegel beginnen der gleich oder kleiner als der maximale Grenzwert ist und wird dann solange andauern, bis der durch die Sekundärseite 104 bis 107 fließende Strom Null ist.

Das oben beschriebene Betreiben des Sperrwandlers 10 in dem ersten Betriebsmodus bzw. in dem BCM-Modus ist in Figuren 2 und 3 gezeigt. In Figuren 2 und 3 repräsentiert das Bezugszeichen 101 den primärseitigen Schalter 101, der eingeschaltet ("Ein") oder ausgeschaltet ("Aus") wird. Das Bezugszeichen 105 weist in Figuren 2 und 3, je nach Ausgestaltung des Sperrwandlers 10, auf den sekundärseitigen Schalter 105 oder auf die - nicht erfindungsgemäße - sekundärseitige Diode 105 hin. Durch die Angabe "Ein" zum Bezugszeichen 105 wird angegeben, dass der sekundärseitige Schalter 105 eingeschaltet ist oder dass die sekundärseitige Diode 105 aktiviert ist. Durch die Angabe "Aus" zum Bezugszeichen 105 wird angegeben, dass der sekundärseitige Schalter 105 ausgeschaltet ist oder dass die sekundärseitige Diode 105 aktiviert ist.

Der zweite und auch der dritte Betriebsmodus ist derart gestaltet, dass der durch die Sekundärseite 104 bis 107 fließende Strom zumindest zeitweise in eine Negativrichtung fließt, d.h. der Stromwert liegt unterhalb des Nullwerts bzw. unterhalb der Nulllinie und sinkt weiterhin. In beiden Figuren 2 und 3 wird zu dem zweiten Betriebsmodus nur der Verlauf des durch die Sekundärseite 104 bis 107 fließenden Stroms angegeben (siehe die durchgezogenen Linien, die zu dem zweiten und dritten Betriebsmodus gehören).

Der Betrieb des Sperrwandlers 10 kann beispielsweise derart erfolgen, dass auf jeden Zyklus des Betriebs im ersten Betriebsmodus bzw. im BCM-Modus, der jeweils eine Leitphase und eine Sperrphase aufweist, jeweils ein des zweiten oder dritten Betriebsmodus nachfolgt. In Figuren 2 und 3 wird aus Gründen der Einfachheit und einer besseren Übersicht jeweils nur ein Zyklus mit der dazugehörigen Leitphase und der dazugehörigen Sperrphase zum Betrieb des Sperrwandlers 10 im ersten Betriebsmodus angezeigt, gefolgt von einem Betrieb im zweiten oder dritten Betriebsmodus, gefolgt wiederum von einem Betrieb im ersten Betriebsmodus. Gemäß einer Ausführungsform würde wieder ein Betrieb im zweiten oder dritten Betriebsmodus folgen, dies ist aus Gründen der Einfachheit und einer besseren Übersicht nicht dargestellt. Der Wechsel von dem ersten Betriebsmodus in den zweiten Betriebsmodus wird z.B. durch die Steuerung 13 angesteuert, wobei kein Umschalten des primärseitigen Schalters 101 oder des sekundärseitigen Schalters 105 erforderlich ist. Der Wechsel von dem ersten Betriebsmodus in den dritten Betriebsmodus wird z.B. durch die Steuerung 13 angesteuert, wobei hier ein Ausschalten des sekundärseitigen Schalters 105 erfolgt.

Zur Klarstellung soll festgehalten werden, dass der erste Betriebsmodus bzw. der BCM-Modus nicht zwingend durch ein Wiedereinschalten des primärseitigen Schalters 101 abgeschlossen werden muß. Gemäß dieser Erfindung betrifft der erste Betriebsmodus bzw. der BCM-Modus nur einen Betrieb des Sperrwandlers 10, wo der Strom auf der Sekundärseite 104 bis 107 während der Ausschaltphase des primärseitigen Schalters 101 den Nullwert bzw. die Nulllinie erreicht. Gemäß der Erfindung kann der Sperrwandler derart betrieben werden, dass auf jeden Betrieb im ersten Betriebsmodus bzw. in dem BCM-Modus jeweils ein Betrieb im zweiten oder dritten Betriebsmodus für jeden Zyklus erfolgen kann.

Das Betreiben des Sperrwandlers 10 im ersten Betriebsmodus bzw. im BCM-Modus kann beispielsweise auch gemäß einer weiteren Ausführungsform eine vorbestimmte Anzahl an Zyklen, die jeweils eine Leitphase und eine Sperrphase aufweisen, andauern. In Figuren 2 und 3 wird aus Gründen der Einfachheit und einer besseren Übersicht jeweils nur ein Zyklus mit der dazugehörigen Leitphase und der dazugehörigen Sperrphase zum Betrieb des Sperrwandlers 10 im ersten Betriebsmodus angezeigt. Wurde die vorbestimmte Anzahl an Zyklen im ersten Betriebsmodus bzw. im BCM-Modus erreicht, kann von dem ersten Betriebsmodus in den zweiten Betriebsmodus gewechselt werden. Der Wechsel von dem ersten Betriebsmodus in den zweiten Betriebsmodus wird z.B. durch die Steuerung 13 angesteuert. Hierzu ist die Steuerung 13 ausgestaltet, zu bestimmen, ob die vorbestimmte Anzahl an Zyklen im ersten Betriebsmodus bzw. im BCM-Modus erreicht wurde. Wenn ja, steuert die Steuerung 13 den Wechsel von dem ersten Betriebsmodus in den zweiten Betriebsmodus an.

Gemäß der Ausführungsform der Fig. 2, wird der Sperrwandler 10 in dem zweiten Betriebsmodus so betrieben, dass der durch die Sekundärseite 104 bis 107 des Sperrwandlers 10 fließende Strom bis zu einem unteren Grenzwert in die Negativrichtung fließt.

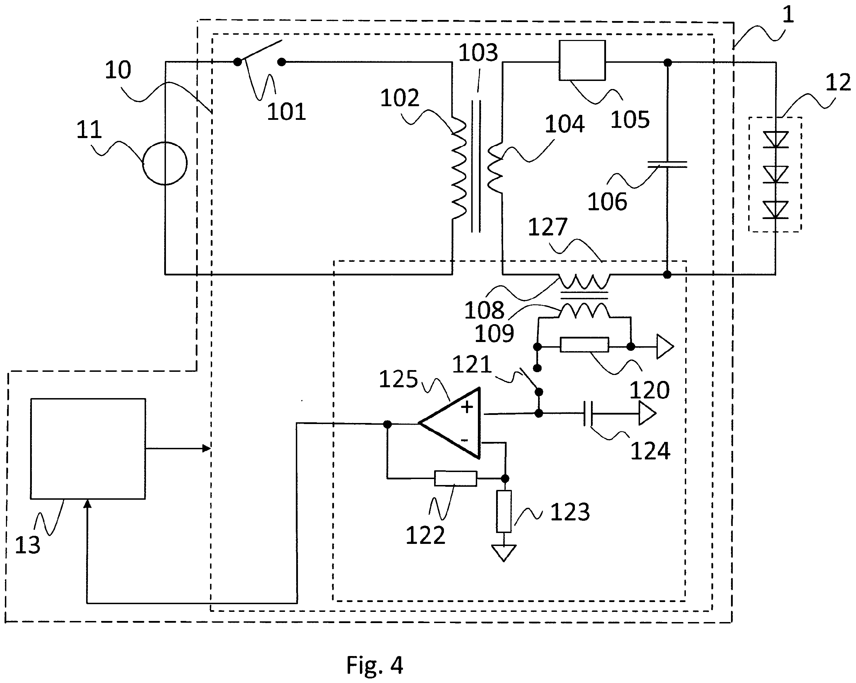

Gemäß der Ausführungsform der Fig. 2, steuert die Steuerung 13 den Betrieb des Sperrwandlers 10 in dem zweiten Betriebsmodus durch ein Belassen des primärseitigen Schalters 101 in einem ausgeschalteten Zustand und auf der Sekundärseite 104 bis 107 durch ein Belassen des Schalters 105 in dem eingeschalteten Zustand oder durch ein Belassen der Diode 105 in dem aktivierten Zustand. Damit wird in dem zweiten Betriebsmodus eine Art des Fortsetzens der Sperrphase des ersten Betriebsmodus vorgenommen. Die Steuerung 13 erhält Strominformationen zu dem durch die Sekundärseite 104 bis 107 fließenden Strom und prüft z.B., ob der durch die Sekundärseite 104 bis 107 fließende Strom den unteren Grenzwert erreicht hat. Die Strominformationen werden z.B. von der Stromerfassungsschaltung 107 bereitgestellt bzw. der Steuerung 13 zugeführt. Stellt die Steuerung 13 fest, dass der untere Grenzwert erreicht worden ist, steuert die Steuerung 13 den Wechsel von dem zweiten Betriebsmodus in den ersten Betriebsmodus an. Die Steuerung 13 kann das Erreichen des unteren Grenzwertes auch indirekt bestimmen, beispielsweise durch eine Messung des durch die Sekundärseite 104 bis 107 fließenden Stromes an einem oder mehreren festgelegten Zeitpunkten, und daraus auf den zu erwartenden Zeitpunkt des Erreichens des unteren Grenzwertes schließen. Es kann somit auch ein zeitgesteuerter Wechsel vom zweiten in den ersten Betriebsmodus und somit ein zeitgesteuertes Wiedereinschalten des primärseitigen Schalters 101 erfolgen, beispielsweise abhängig von einer Stromerfassung mittels Stromerfassungsschaltung 107, wie dies anhand des Beispiels der Fig. 4 erläutert wird.

Der erste Betriebsmodus beginnt mit einer Leitphase und endet mit einer Sperrphase, wie bereits oben dargestellt. Wenn der erste Betriebsmodus nach dem Umschalten von dem zweiten Betriebsmodus einsetzt, also nach dem Ende einer Sperrphase, ist der durch die Sekundärseite 104 bis 107 des Sperrwandlers 10 fließende Strom ungleich Null, da noch ein Stromfluß vorhanden ist. In diesem Fall wird aufgrund der bestehenden Magnetisierung des Transformators der Strom beim Einschalten des primärseitigen Schalters 101 einen negativen Wert einnehmen, der dem Wicklungsverhältnis entsprechend umgesetzten Strom der Sekundärseite entspricht.

Das Ansteuern des Wechsels von dem zweiten Betriebsmodus in den ersten Betriebsmodus erfolgt gemäß der Ausführungsform der Fig. 2 durch ein Einschalten des primärseitigen Schalters 101 und auf der Sekundärseite 104 bis 107 des Sperrwandlers 10 durch ein Ausschalten des sekundärseitigen Schalters 105 oder durch ein Deaktivieren der sekundärseitigen Diode 105. Wie in Fig. 2 gezeigt, ist der Strompegel des Stroms der Primärseite 101, 102 des Sperrwandlers 10 zunächst negativ, da durch den zweiten Betriebsmodus die Sperrphase "verlängert" wurde.

Fig. 3 zeigt ein zu der Ausführungsform der Fig. 2 alternatives Betreiben des Sperrwandlers 10 in dem dritten Betriebsmodus. Dabei wird der Sperrwandler 10 gemäß dem nicht zur vorliegenden Erfindung gehörigen Beispiel der Fig. 3 in dem dritten Betriebsmodus so betrieben, dass der durch die Sekundärseite 104 bis 107 des Sperrwandlers 10 fließende Strom schwingt. D.h. der durch die Sekundärseite 104 bis 107 des Sperrwandlers 10 fließende Strom fließt zunächst in die Negativrichtung, steigt dann an, wobei beim Anstieg der Strom einen positiven Wert erreicht, und sinkt anschließend Richtung Null. Es soll hier angemerkt werden, dass der sekundärseitige Strom in diesem dritten Betriebsmodus sehr klein ist, da nur ein Strom durch parasitäre Elemente fließen kann. Alternativ zum Stromfluß kann in diesem Betriebsmodus auch die schwingende Spannung an einem Punkt der Sekundärseite 104 bis 107 überwacht werden.

Auch gemäß der Fig. 3 steuert die Steuerung 13 den Betrieb des Sperrwandlers 10 in dem dritten Betriebsmodus an. Zu diesem Zweck steuert die Steuerung ein Belassen des primärseitigen Schalters 101 in einem ausgeschalteten Zustand an und auf der Sekundärseite 104 bis 107 ein Ausschalten des Schalters 105 oder ein Deaktivieren der Diode 105 an.

Gemäß der Fig. 3 wird der Sperrwandler 10 in dem dritten Betriebsmodus solange betrieben bis eine vorbestimmte Zeitdauer abgelaufen ist oder ein bestimmter Zustand der Schwingzyklen erreicht ist, beispielsweise der Nulldurchgang der Spannung oder des Stromes nach dem x-ten Schwingzyklus. Die vorbestimmte Zeitdauer ist gemäß einer weiteren Ausführungsform z.B. durch eine vorbestimmte Anzahl von Schwingzyklen vorgegeben.

Die Steuerung 13 ist somit ausgestaltet, den Wechsel in den dritten Betriebsmodus anzusteuern und zu prüfen, ob die vorbestimmte Zeitdauer abgelaufen ist. Ist die vorbestimmte Zeitdauer abgelaufen, steuert die Steuerung 13 den Wechsel von dem dritten Betriebsmodus in den ersten Betriebsmodus an.

Wird die vorbestimmte Zeitdauer durch eine vorbestimmte Anzahl von Schwingzyklen vorgegeben, verfolgt die Steuerung 13 den durch die Sekundärseite 104 bis 107 fließende Strom, bzw. seine Werte. Die Steuerung 13 erhält die notwendigen Strominformationen z.B. von der Stromerfassungsschaltung 7. Stellt die Steuerung 13 fest, dass die vorbestimmte Anzahl von Schwingzyklen erreicht worden ist, steuert die Steuerung 3 einen Wechsel von dem dritten Betriebsmodus in den ersten Betriebsmodus an.

Das Ansteuern des Wechsels von dem dritten Betriebsmodus in den ersten Betriebsmodus erfolgt gemäß der Fig. 3 durch ein Einschalten des primärseitigen Schalters 101 und auf der Sekundärseite 104 bis 107 des Sperrwandlers 10 durch ein Belassen des sekundärseitigen Schalters 105 in dem ausgeschalteten Zustand oder durch ein Belassen der sekundärseitigen Diode 105 in einem deaktivierten Zustand.

Wenn der erste Betriebsmodus nach dem Umschalten von dem dritten Betriebsmodus einsetzt, also nach dem Ende einer Sperrphase, ist der durch die Sekundärseite 104 bis 107 des Sperrwandlers 10 fließende Strom nahezu Null, da wie bereits beschrieben nahezu kein Stromfluß vorhanden ist. In diesem Fall besteht keine Magnetisierung des Transformators beim Einschalten des primärseitigen Schalters 101 und der Strom auf der Primärseite wird bei Null beginnen, wie dies auch in Fig. 3 für den zweiten Zyklus des ersten Betriebsmodus dargestellt ist. Aufgrund von parasitären Kapazitäten kann es auch zu einer kurzen Stromspitze beim Einschalten des primärseitigen Schalters 101 kommen, diese Stromspitze ist aber normalerweise sehr kurz und daher im Sinne der Einfachheit nicht in Fig. 3 dargestellt. Nach dem Auslaufen der Stromspitze würde der primärseitige Stromfluß entlang der gestrichelten Linie ansteigen.

Gemäß einer weiteren Ausführungsform wird der Sperrwandler 10 hinsichtlich höherer Ausgangsströme (z.B. hinsichtlich Ausgangsströme, die höher als ein durchschnittlicher Strompegel sind) in dem ersten Betriebsmodus, d.h. in dem BCM-Modus betrieben und hinsichtlich niedrigerer Ausgangsströme (z.B. hinsichtlich Ausgangsströme, die niedriger als ein durchschnittlicher Strompegel sind) in dem zweiten und / oder in dem dritten Betriebsmodus betrieben. Der Ausgangsstrom bezeichnet den dem Leuchtmittel, beispielsweise einer oder den mehreren Leuchtdioden, bereitzustellenden Strom. Gemäß dieser Ausführungsform wird der Wechsel von dem ersten Betriebsmodus in den zweiten und / oder dritten Betriebsmodus beim Vorliegen eines niedrigen oder niedrigeren Ausgangsstroms vorgenommen und der Wechsel von dem zweiten und / oder dritten Betriebsmodus in den ersten Betriebsmodus beim Vorliegen eines hohen oder höheren Ausgangsstroms vorgenommen. Das Betreiben des Sperrwandlers 10 in dem ersten, in dem zweiten oder in dem dritten Betriebsmodus wird dabei wie bereits oben beschrieben vorgenommen (siehe insbesondere die Ausführungen zu Figuren 2 und 3).

Der Sperrwandler kann auch in einem Mischbetrieb aller drei Betriebsmodi betrieben werden. Bei sehr hohen Lasten kann beispielsweise nur der Betrieb in dem ersten Betriebsmodus gewählt werden, bei sehr niedrigen Lasten kann zusätzlich der dritte Betriebsmodus (auf den ersten Betriebsmodus folgend) und bei mittleren Lasten oder dem Lastbereich zwischen hoher und niedriger Last kann der zweite Betriebsmodus (auf den ersten Betriebsmodus folgend) gewählt werden.

Damit betrifft die Erfindung auch einen Sperrwandler 10 zum Betreiben von einem oder mehreren Leuchtmitteln 12, wobei der Sperrwandler 10 ausgestaltet ist, in einem ersten Betriebsmodus, in einem zweiten oder in einem dritten Betriebsmodus betrieben zu werden, wobei der erste Betriebsmodus ein Boundary Conduction Mode, BCM-Modus, ist und wobei in dem zweiten oder dritten Betriebsmodus des Sperrwandlers 10 der durch die Sekundärseite 104 bis 107 des Sperrwandlers 11 fließende Strom zumindest zeitweise in eine Negativrichtung fließt. Die Erfindung betrifft auch ein Verfahren zum Betreiben eines Sperrwandlers 10 und ein Betriebsgerät 1, das den Sperrwandler 10 aufweist.

Fig. 4 zeigt eine weitere beispielhafte Ausgestaltung eines Betriebsgeräts 1 zum Betreiben von einem oder mehreren Leuchtmitteln 12 gemäß einer Ausführungsform der vorliegenden Erfindung. Dieses Ausführungsbeispiel entspricht in Bezug auf die Ausführung des Sperrwandlers 10 dem Ausführungsbeispiel der Fig. 1 mit Ausnahme der Stromerfassungsschaltung 127. Diese Stromerfassungsschaltung 127 unterscheidet sich von der Stromerfassungsschaltung 107, wie im Weiteren erläutert wird. Der Betrieb des Sperrwandlers 10 entspricht auch in diesem Beispiel den anhand der Fig. 1 bis 2 erläuterten Beispiele.

Die Stromerfassungsschaltung 127 umfasst einen Stromerfassungstransformator mit der ersten Wicklung 108 und der zweiten Wicklung 109. Die erste Wicklung 108 des Stromerfassungstransformators ist dazu ausgelegt, um den durch die Sekundärseite 104 bis 127 und insbesondere durch die Leuchtmittel 12 fließenden Strom zu erfassen. Vorzugsweise wird der Stromerfassungstransformator mit der ersten Wicklung 108 und der zweiten Wicklung 109 derart ausgelegt, dass er auch bei maximaler Ausgangsleistung und / oder maximalem Ausgangsstrom auf der Sekundärseite 104 bis 127 mit dem Leuchtmittel 12 im linearen Betrieb arbeiten kann und nicht in den oder nahe dem Sättigungsbereich kommen kann.

Der erste Resonator 120 (auch Abschlußwiderstand oder "burden resistor" genannt) der Stromerfassungsschaltung 127 ist in der Fig. 4 als zusätzliches Element parallel zu der zweiten Wicklung 109 angeordnet. Wenn durch die zweite Wicklung 109 Strom fließt, entwickelt sich ein Spannungsverlauf auf dem ersten Resonator 120, wobei die Spannung über dem ersten Resonator 120 proportional zu dem Strom durch die zweite Wicklung 109 verläuft.

Die über dem ersten Resonator 120 erfasste Spannung und somit der von der zweiten Wicklung 109 erfasste Strom wird einer Abtast-Halte-Schaltung ("Sample and Hold" Schaltung) zugeführt, welche aus dem Schaltelement 121 und dem Halteelement 124, welches durch einen Kondensator gebildet werden kann, besteht. Vorzugsweise wird das Schaltelement 121 in der Einschaltphase des primärseitigen Schalters 101 kurzzeitig geschlossen, wodurch an dem Halteelement 124 die an dem ersten Resonator 120 anliegende Spannung ebenfalls anliegt. Da das Schaltelement 121 nur kurzzeitig geschlossen wird und danach wieder geöffnet wird, vorzugsweise noch während der Ausschaltphase des primärseitigen Schalters 101, bleibt diese am Halteelement 124 anliegende Spannung erhalten und kann als Ausgangssignal der Abtast-Halte-Schaltung in weiterer Folge ausgewertet werden.

Da bei dem Sperrwandler 10 auf der Sekundärseite 104 bis 107 ein Gleichstrom fließt, erfolgt durch das Stromerfassungsschaltung 107 mit dem Stromerfassungstransformator 108, 109 eine Erfassung eines sich ändernden Gleichstromes. Die Messung eines derartigen Gleichstromes unterscheidet sich von der Strommessung eines Wechselstromes, wie dies beispielsweise bei einem resonanten Halbbrückenwandler angewendet werden kann. Da bei dem Sperrwandler 10 auf der Sekundärseite 104 bis 107 ein sich ändernder Gleichstrom fließt, ergibt sich für den an der sekundärseitigen Wicklung 109 erfassten Strom und somit für die über dem ersten Resonator 120 erfasste Spannung im Mittel ein Versatzwert, da der Mittelwert der Spannung am ersten Resonator 120 ungleich Null ist. Dieser Versatzwert entspricht unter Beachtung der Auslegung der Stromerfassungsschaltung 107 dem mittleren Strom auf der Sekundärseite 104 bis 107 und somit dem mittleren Strom durch das Leuchtmittel 12.

Bei den Wechsel vom zweiten Betriebsmodus in den ersten Betriebsmodus erfolgt das Ausschalten des sekundärseitigen Schalters 105. Da während der Einschaltphase des sekundärseitigen Schalters 105 der Stromerfassungstransformator 108, 109 magnetisiert ist, und nach dem Ausschalten des sekundärseitigen Schalters 105 diese Magnetisierung noch vorhanden ist, kann sich diese Magnetisierung nur über dem ersten Resonator 120 abbauen. Wenn dieser erste Resonator 120 ausreichend klein dimensioniert ist, wird sich diese Magnetisierung des Stromerfassungstransformators 108, 109 nur langsam abbauen. Dieser Effekt kann genutzt werden, um in der auf das Ausschalten des sekundärseitigen Schalters 105 nachfolgenden Einschaltphase des primärseitigen Schalters 101 die Spannung über dem ersten Resonator 120 mit der Abtast-Halte-Schaltung zu erfassen. Da die Magnetisierung des Stromerfassungstransformators 108, 109 am Ende der Einschaltphase des sekundärseitigen Schalters 105 dem mittleren Strom auf der Sekundärseite 104 bis 107 entspricht, kann somit durch die beschriebene Erfassung mittels Abtast-Halte-Schaltung auf den mittleren Strom geschlossen werden.

Das Ausgangssignal der Abtast-Halte-Schaltung wird dem positiven Eingang eines Operationsverstärkers 125 zugeführt. Der negative Eingang des Operationsverstärkers 125 ist über einen ersten Verstärkerwiderstand 122 oder einem anderen Verstärkerelement mit dem Ausgang des Operationsverstärkers 125 gekoppelt. Der negative Eingang des Operationsverstärkers 125 ist weiterhin über einen zweiten Verstärkerwiderstand 123 mit Masse gekoppelt. Der Operationsverstärkers 125 bildet gemeinsam mit dem ersten Verstärkerwiderstand 122 und dem zweiten Verstärkerwiderstand 123 eine Verstärkerschaltung. Diese Verstärkerschaltung ist als nichtinvertierender Verstärker ausgebildet, wobei die beiden Verstärkerwiderstände 122 und 123 einen Spannungsteiler bilden, der in die Gegenkopplung geschaltet ist. Das Verhältnis zwischen dem ersten Verstärkerwiderstand 122 und dem zweiten Verstärkerwiderstand 123 im Spannungsteiler bestimmt den Verstärkungsfaktor der Verstärkerschaltung. Abhängig vom tatsächlichen Widerstandswert des ersten Resonators 120 kann der Verstärkungsfaktor der Verstärkerschaltung eingestellt werden, um den Einfluß des ersten Resonators 120 auf die Stromerfassung zu minimieren oder auch zu optimieren.

Vorzugsweise können die Abtast-Halte-Schaltung, mit dem Schaltelement 121 und dem Halteelement 124, und die Verstärkerschaltung, mit dem Operationsverstärker 125, als Teil einer integrierten Halbleiterschaltung ("integrated circuit") angeordnet sein, und beispielsweise in die Steuerung 13 mit integriert werden, insbesondere wenn die Steuerung 13 als integrierte Halbleiterschaltung ausgeführt ist.

### Liste der Referenzzeichen

- 1: Betriebsgerät
- 10: Sperrwandler
- 101: primärseitiger Schalter
- 102: primärseitige Wicklung
- 103: Magnetfeld
- 104: sekundärseitige Wicklung
- 105: sekundärseitiger Schalter oder sekundärseitige Diode
- 106: Kondensator
- 107: Stromerfassungsschaltung
- 108: erste Wicklung der Stromerfassungsschaltung
- 109: zweite Wicklung der Stromerfassungsschaltung
- 110: erster Resonator der Stromerfassungsschaltung
- 111: zweiter Resonator der Stromerfassungsschaltung
- 112: Offset-Strom
- 113: dritter Resonator der Stromerfassungsschaltung
- 114: Kondensator der Stromerfassungsschaltung
- 11: Spannungsquelle oder externe Stromquelle
- 12: ein oder mehrere Leuchtmittel (z.B. LEDs)
- 13: Steuerung
- 120: erster Resonator der Stromerfassungsschaltung
- 121: Schaltelement der Stromerfassungsschaltung
- 122: erster Verstärkerwiderstand
- 123: zweiter Verstärkerwiderstand
- 124: Halteelement
- 125: Operationsverstärker

## Patentansprüche

1. Sperrwandler (10) zum Betreiben von einem oder mehreren Leuchtmitteln (12),
wobei der Sperrwandler (10) ausgestaltet ist, in einem ersten Betriebsmodus oder in einem zweiten Betriebsmodus betrieben zu werden,
wobei der erste Betriebsmodus ein Boundary Conduction Mode, BCM-Modus, ist und
wobei in dem zweiten Betriebsmodus des Sperrwandlers (10) ein durch eine Sekundärseite (104-107) des Sperrwandlers (10) fließender Strom zumindest zeitweise in eine Negativrichtung fließt,
wobei der durch die Sekundärseite (104-107) des Sperrwandlers (10) fließende Strom in dem zweiten Betriebsmodus bis zu einem unteren Grenzwert in die Negativrichtung fließt und / oder bis der Sperrwandler (10) eine vorbestimmte Zeitdauer in dem zweiten Betriebsmodus betrieben worden ist.

2. Sperrwandler (10) nach Anspruch 1, wobei der Sperrwandler (10) ausgestaltet ist, von dem ersten Betriebsmodus in den zweiten Betriebsmodus zu wechseln, wenn der durch die Sekundärseite (104-107) des Sperrwandlers (10) fließende Strom die Nulllinie erreicht.

3. Sperrwandler (10) nach Anspruch 1 oder Anspruch 2, wobei der Sperrwandler (10) einen Transformator aufweist und der Transformator zwischen einer Primärseite (101-102) des Sperrwandlers (10) und der Sekundärseite (104-107) des Sperrwandlers (10) angeordnet ist.

4. Sperrwandler (10) nach Anspruch 3, wobei die Primärseite (101-102) einen primärseitigen Schalter (101) aufweist und die Sekundärseite (104-107) einen sekundärseitigen Schalter (105) aufweist.

5. Sperrwandler (10) nach Anspruch 4, wobei der Sperrwandler (10) derart ausgestaltet ist, dass durch ein Einschalten des primärseitigen Schalters (101) auf der Primärseite (101-102) und ferner durch ein Ausschalten des sekundärseitigen Schalters (105) auf der Sekundärseite (104-107) Strom von einer Spannungsquelle (11) oder externen Stromquelle (11) durch die Primärseite (101-102) zu dem Transformator fließt und der Transformator geladen wird; und der Sperrwandler (10) derart ausgestaltet ist, dass durch ein Ausschalten des primärseitigen Schalters (101) auf der Primärseite (101-102) und ferner durch ein Einschalten des sekundärseitigen Schalters (105) auf der Sekundärseite (104-107) das Fließen des Stroms von der Spannungsquelle (11) oder externen Stromquelle (11) durch die Primärseite (101-102) zu dem Transformator und das Laden des Transformators beendet werden und der im Transformator geladene Strom durch die Sekundärseite (104-107) fließt.

6. Sperrwandler (10) nach Anspruch 4 oder Anspruch 5, wobei der Sperrwandler (10) derart ausgestaltet ist, dass der Sperrwandler (10) in Erwiderung auf ein Einschalten des primärseitigen Schalters (101) der Primärseite (101-102) des Sperrwandlers (10) und ferner bei einem ausgeschalteten Zustand des sekundärseitigen Schalters (105) der Sekundärseite (104-107) des Sperrwandlers (10) in den ersten Betriebsmodus wechselt.

7. Sperrwandler (10) nach einem der Ansprüche 4 bis 6, wobei im ersten Betriebsmodus das Sinken des durch die Sekundärseite (104-107) des Sperrwandlers (10) fließenden Stroms in die Richtung der Nulllinie durch ein Ausschalten des primärseitigen Schalters (101) der Primärseite (101-102) des Sperrwandlers (10) und ferner durch ein Einschalten des sekundärseitigen Schalters (105) auf der Sekundärseite (104-107) des Sperrwandlers (10) erreicht wird.

8. Sperrwandler (10) nach einem der Ansprüche 4 bis 7, wobei im zweiten Betriebsmodus der primärseitige Schalter (101) der Primärseite (101-102) des Sperrwandlers (10) in einem ausgeschalteten Zustand ist.

9. Sperrwandler (10) nach einem der Ansprüche 4 bis 8, wobei der Sperrwandler (10) eine Stromerfassungsschaltung (107) aufweist, die ausgestaltet ist, den durch die Sekundärseite (104-107) des Sperrwandlers (10) fließenden Strom zu erfassen.

10. Sperrwandler (10) nach Anspruch 9, wobei die Stromerfassungsschaltung (107) einen Stromerfassungstransformator (108, 109) aufweist, der vorzugsweise als Stromwandler ausgebildet ist.

11. Sperrwandler (10) nach Anspruch 10, wobei der Stromerfassungstransformator (108, 109) derart ausgelegt ist, dass er auch bei maximaler Ausgangsleistung und / oder maximalem Ausgangsstrom durch das Leuchtmittel (12) im linearen Betrieb arbeiten kann und nicht in den oder nahe dem Sättigungsbereich kommen kann.

12. Sperrwandler (10) nach einem der Ansprüche 9 bis 11, wobei die Stromerfassungsschaltung (107) ausgestaltet ist, beim Erfassen des durch die Sekundärseite (104-107) des Sperrwandlers (10) fließenden Stroms einen Offset-Strom einzuspeisen und bei der Stromerfassung zu berücksichtigen.

13. Sperrwandler (10) nach einem der Ansprüche 1 bis 12, wobei der Sperrwandler (10) derart ausgestaltet ist, dass der durch die Sekundärseite (104-107) des Sperrwandlers (10) fließende Strom zum Betreiben der einen oder der mehreren Leuchtmittel (12) vorgesehen ist.

14. Betriebsgerät (1) zum Betreiben von einem oder mehreren Leuchtmitteln (12), wobei das Betriebsgerät (1) einen Sperrwandler (10) zum Betreiben von den einen oder mehreren Leuchtmitteln (12) aufweist und wobei der Sperrwandler (10) ein Sperrwandler (10) nach einem der Ansprüche 1 bis 13 ist.

15. Betriebsgerät (1) nach Anspruch 14, wobei das Betriebsgerät (1) eine Steuerung (13) aufweist, die zum Ansteuern des Sperrwandlers (10) ausgestaltet ist.

## Claims

1. Flyback converter (10) for operating one or more lighting means (12),
wherein the flyback converter (10) is designed to be operated in a first operating mode or in a second operating mode,
wherein the first operating mode is a boundary conduction mode (BCM mode) and
wherein in the second operating mode of the flyback converter (10), a current flowing through a secondary side (104-107) of the flyback converter (10) flows at least temporarily in a negative direction,
wherein the current flowing through the secondary side (104-107) of the flyback converter (10), in the second operating mode, flows in the negative direction to a lower limit and/or until the flyback converter (10) has been operated for a predetermined period of time in the second operating mode.

2. Flyback converter (10) according to claim 1, wherein the flyback converter (10) is designed to change from the first operating mode to the second operating mode when the current flowing through the secondary side (104-107) of the flyback converter (10) reaches the zero line.

3. Flyback converter (10) according to either claim 1 or claim 2, wherein the flyback converter (10) comprises a transformer and the transformer is arranged between a primary side (101-102) of the flyback converter (10) and the secondary side (104-107) of the flyback converter (10).

4. Flyback converter (10) according to claim 3, wherein the primary side (101-102) comprises a primary-side switch (101) and the secondary side (104-107) comprises a secondary-side switch (105).

5. Flyback converter (10) according to claim 4, wherein the flyback converter (10) is designed such that by switching on the primary-side switch (101) on the primary side (101-102) and further by switching off the secondary-side switch (105) on the secondary side (104-107), current flows from a voltage source (11) or external current source (11) through the primary side (101-102) to the transformer and the transformer is charged; and the flyback converter (10) is designed such that by switching off the primary-side switch (101) on the primary side (101-102) and further by switching on the secondary-side switch (105) on the secondary side (104-107), the flow of the current from the voltage source (11) or external current source (11) through the primary side (101-102) to the transformer and the charging of the transformer are terminated, and the current charged in the transformer flows through the secondary side (104-107).

6. Flyback converter (10) according to either claim 4 or claim 5, wherein the flyback converter (10) is designed such that the flyback converter (10) changes to the first operating mode in response to the primary-side switch (101) of the primary side (101-102) of the flyback converter (10) switching on and further when the secondary-side switch (105) of the secondary side (104-107) of the flyback converter (10) is in a switched-off state.

7. Flyback converter (10) according to any of claims 4 to 6, wherein in the first operating mode, the decrease in the current flowing through the secondary side (104-107) of the flyback converter (10) in the direction of the zero line is achieved by switching off the primary-side switch (101) of the primary side (101-102) of the flyback converter (10) and further by switching on the secondary-side switch (105) on the secondary side (104-107) of the flyback converter (10).

8. Flyback converter (10) according to any of claims 4 to 7, wherein in the second operating mode, the primary-side switch (101) of the primary side (101-102) of the flyback converter (10) is in a switched-off state.

9. Flyback converter (10) according to any of claims 4 to 8, wherein the flyback converter (10) comprises a current detection circuit (107) designed to detect the current flowing through the secondary side (104-107) of the flyback converter (10).

10. Flyback converter (10) according to claim 9, wherein the current detection circuit (107) comprises a current detection transformer (108, 109) which is preferably designed as a current transformer.

11. Flyback converter (10) according to claim 10, wherein the current detection transformer (108, 109) is designed such that it can operate in a linear mode even at maximum output power and/or maximum output current through the lighting means (12) and cannot come into or close to the saturation region.

12. Flyback converter (10) according to any of claims 9 to 11, wherein the current detection circuit (107) is designed to feed in an offset current when detecting the current flowing through the secondary side (104-107) of the flyback converter (10) and to take it into account when detecting the current.

13. Flyback converter (10) according to any of claims 1 to 12, wherein the flyback converter (10) is designed such that the current flowing through the secondary side (104-107) of the flyback converter (10) is provided for operating the one or more lighting means (12).

14. Operating device (1) for operating one or more lighting means (12), wherein the operating device (1) comprises a flyback converter (10) for operating the one or more lighting means (12) and wherein the flyback converter (10) is a flyback converter (10) according to any of claims 1 to 13.

15. Operating device (1) according to claim 14, wherein the operating device (1) comprises a controller (13) which is designed to control the flyback converter (10).

## Revendications

1. Convertisseur indirect (10) pour le fonctionnement d'un ou de plusieurs moyens d'éclairage (12),
le convertisseur indirect (10) étant réalisé pour fonctionner dans un premier mode de fonctionnement ou dans un second mode de fonctionnement,
le premier mode de fonctionnement étant un mode de conduction périphérique, BCM, et
dans le second mode de fonctionnement du convertisseur indirect (10), un courant circulant à travers un côté secondaire (104-107) du convertisseur indirect (10) circulant au moins temporairement dans un sens négatif,
le courant circulant à travers le côté secondaire (104-107) du convertisseur indirect (10) circulant, dans le second mode de fonctionnement, dans le sens négatif jusqu'à une valeur limite inférieure et/ou jusqu'à ce que le convertisseur indirect (10) ait fonctionné dans le second mode de fonctionnement pendant une durée prédéterminée.

2. Convertisseur indirect (10) selon la revendication 1, le convertisseur indirect (10) étant réalisé pour passer du premier mode de fonctionnement au second mode de fonctionnement lorsque le courant circulant à travers le côté secondaire (104-107) du convertisseur indirect (10) atteint la ligne zéro.

3. Convertisseur indirect (10) selon la revendication 1 ou la revendication 2, le convertisseur indirect (10) présentant un transformateur et le transformateur étant disposé entre un côté primaire (101-102) du convertisseur indirect (10) et le côté secondaire (104-107) du convertisseur indirect (10).

4. Convertisseur indirect (10) selon la revendication 3, le côté primaire (101-102) présentant un commutateur côté primaire (101) et le côté secondaire (104-107) présentant un commutateur côté secondaire (105).

5. Convertisseur indirect (10) selon la revendication 4, le convertisseur indirect (10) étant réalisé de telle sorte que, par une mise en circuit du commutateur côté primaire (101) sur le côté primaire (101-102) et en outre par une mise hors circuit du commutateur côté secondaire (105) sur le côté secondaire (104-107), un courant circule depuis une source de tension (11) ou une source de courant externe (11) à travers le côté primaire (101-102) vers le transformateur et le transformateur est chargé ; et le convertisseur indirect (10) étant réalisé de telle sorte que, par une mise hors circuit du commutateur côté primaire (101) sur le côté primaire (101-102) et en outre par une mise en circuit du commutateur côté secondaire (105) sur le côté secondaire (104-107), la circulation du courant depuis la source de tension (11) ou la source de courant externe (11) à travers le côté primaire (101-102) vers le transformateur et la charge du transformateur sont arrêtées et le courant chargé dans le transformateur circule à travers le côté secondaire (104-107).

6. Convertisseur indirect (10) selon la revendication 4 ou la revendication 5, le convertisseur indirect (10) étant réalisé de telle sorte que le convertisseur indirect (10) passe dans le premier mode de fonctionnement en réponse à une mise en circuit du commutateur côté primaire (101) sur le côté primaire (101-102) du convertisseur indirect (10) et en outre lorsque le commutateur côté secondaire (105) sur le côté secondaire (104-107) du convertisseur indirect (10) est dans un état hors tension.

7. Convertisseur indirect (10) selon l'une des revendications 4 à 6, la diminution du courant circulant à travers le côté secondaire (104-107) du convertisseur indirect (10) dans la direction de la ligne zéro étant obtenue, dans le premier mode de fonctionnement, par une mise hors circuit du commutateur côté primaire (101) sur le côté primaire (101-102) du convertisseur indirect (10) et en outre par une mise en circuit du commutateur côté secondaire (105) sur le côté secondaire (104-107) du convertisseur indirect (10).

8. Convertisseur indirect (10) selon l'une des revendications 4 à 7, le commutateur côté primaire (101) sur le côté primaire (101-102) du convertisseur indirect (10) étant, dans le second mode de fonctionnement, dans un état hors circuit.

9. Convertisseur indirect (10) selon l'une des revendications 4 à 8, le convertisseur indirect (10) présentant un circuit de détection de courant (107) réalisé pour détecter le courant circulant à travers le côté secondaire (104-107) du convertisseur indirect (10).

10. Convertisseur indirect (10) selon la revendication 9, le circuit de détection de courant (107) présentant un transformateur de détection de courant (108, 109), qui est de préférence conçu comme un convertisseur de courant.

11. Convertisseur indirect (10) selon la revendication 10, le transformateur de détection de courant (108, 109) étant conçu de telle sorte qu'il peut fonctionner en mode linéaire, même lorsque la puissance de sortie et/ou le courant de sortie à travers le moyen d'éclairage (12) sont maximaux, et qu'il ne peut pas entrer dans la zone de saturation ou être proche de celle-ci.

12. Convertisseur indirect (10) selon l'une des revendications 9 à 11, le circuit de détection de courant (107) étant réalisé pour injecter un courant de décalage lors de la détection du courant circulant à travers le côté secondaire (104-107) du convertisseur indirect (10) et pour en tenir compte lors de la détection du courant.

13. Convertisseur indirect (10) selon l'une des revendications 1 à 12, le convertisseur indirect (10) étant réalisé de telle sorte que le courant circulant à travers le côté secondaire (104-107) du convertisseur indirect (10) est prévu pour le fonctionnement du ou des moyens d'éclairage (12).

14. Appareil de fonctionnement (1) pour le fonctionnement d'un ou de plusieurs moyens d'éclairage (12), l'appareil de fonctionnement (1) présentant un convertisseur indirect (10) pour le fonctionnement du ou des moyens d'éclairage (12) et le convertisseur indirect (10) étant un convertisseur indirect (10) selon l'une des revendications 1 à 13.

15. Appareil de fonctionnement (1) selon la revendication 14, l'appareil de fonctionnement (1) présentant une commande (13) qui est réalisée pour la commande du convertisseur indirect (10).
